# EUROPÄISCHE PATENTANMELDUNG

(11) **EP 2 823 940 A1**
(43) Veröffentlichungstag der Anmeldung: **14.01.2015**
(21) Anmeldenummer: 14002021.5
(22) Anmeldetag: 12.06.2014
(51) Int. Cl.: B25J 15/06, B65G 47/92, H02K 15/03, B66C 1/06, H01F 7/20

(54) **Vorrichtung und Verfahren zum Greifen und Positionieren eines Permanentmagneten**

(30) Priorität: 11.07.2013 DE 102013011513
(71) Anmelder: Friedrich-Alexander-Universität Erlangen-Nürnberg, 91054 Erlangen (DE)
(72) Erfinder: Tremel, Jan, DE - 96199 Zapfendorf (DE)
(74) Vertreter: FDST Patentanwälte

(57) **Zusammenfassung**

Es werden eine Vorrichtung (1) und ein Verfahren zum Greifen und Positionieren eines Permanentmagneten (30) angegeben. Die Vorrichtung (1) umfasst eine mit einer Spannung beaufschlagbare Spule (3) zur Erzeugung eines Magnetfeldes und einen sich entlang der Längsachse (5) der Spule (3) erstreckenden Kern (6) aus einem ferri- oder ferromagnetischen Material, der wenigstens teilweise im Inneren der Spule (3) aufgenommen ist, und an dem auf einer Arbeitsseite (12) axialendseitig außerhalb der Spule (3) eine Haftfläche (16) zum Greifen des Permanentmagneten (30) angeordnet ist, wobei an der Arbeitsseite (12) bei spannungsbeaufschlagter Spule (3) ein einzelner magnetischer Wirkpol ausgebildet ist.

## Beschreibung

Die Erfindung betrifft eine Vorrichtung und ein Verfahren zum Greifen und Positionieren eines Permanentmagneten. Die Erfindung beschäftigt sich insbesondere mit dem Thema, eine elektromagnetische Maschine automatisiert mit Permanentmagneten zu bestücken.

Eine permanenterregte Synchronmaschine ist eine Bauform einer elektromagnetischen Synchronmaschine, bei der zum Aufbau des magnetischen Erregerfeldes Permanentmagnete eingesetzt werden. Die permanenterregte Synchronmaschine stellt sich aufgrund ihres hohen Wirkungsgrades zunehmend als optimale Antriebsvariante für Elektro- und Hybridfahrzeuge heraus. Der Aufbau einer permanenterregten Synchronmaschine erfordert insbesondere die Montage von Permanentmagneten vorrangig auf dem Rotor, der als ein Außen- oder als ein Innenläufer ausgebildet sein kann. In anderen elektromagnetischen Maschinen kann die Montage von Permanentmagneten auch auf dem Stator vorgesehen sein. Zu einer wirtschaftlichen Durchführung der Montage von Permanentmagneten ist neben einer hohen Flexibilität der benötigten Handhabungsvorrichtung bzgl. Motor- und Magnetvarianten auch die sichere Beherrschung der während des Bestückungsprozesses entstehenden Prozesskräfte durch einen entsprechenden Greifer erforderlich. So muss insbesondere zur Realisierung einer spaltfreien Magnetanordnung beispielsweise die Handhabung von Magneten bei engen Raumverhältnissen gewährleistet sein.

Ein mechanischer Greifer hat grundsätzlich den Nachteil, dass er zum Ergreifen und Absetzen eines Objekts Platz benötigt, insbesondere für die Platzierung der letzten Magnete eines Polkomplexes. Eine stoßfreie Bestückung einer elektromagnetischen Maschine mit Permanentmagneten ist daher mit einem mechanischen Greifer nur komplex lösbar und infolgedessen hinsichtlich der Wirtschaftlichkeit lediglich suboptimal möglich. Auf der anderen Seite bedingt die Behandlung von Permanentmagneten aufgrund der sich im Detail unvorhersagbar gegenseitig beeinflussenden Magnetfelder eine sorgfältige Analyse und Auslegung des Positionierungssystems an sich, da eine fehlerhafte Positionierung des Permanentmagneten zu einer geringeren Leistung, zu einer verkürzten Lebensdauer oder zu einer Betriebsunfähigkeit der bestückten elektromagnetischen Maschine führen kann. Das Positionierungssystem muss daher insbesondere in der Lage sein, die durch die Permanentmagnete hervorgerufenen Wechselwirkungen, die zu einer Positionsänderung des transportierten Permanentmagneten führen könnten, sicher zu beherrschen.

Um die vorgenannte Problematik zu vermeiden, ist es auch vorstellbar, eine elektromagnetische Maschine zunächst mit "Permanentmagneten" zu bestücken, die noch nicht magnetisiert oder entmagnetisiert sind. Erst im bestückten Zustand erfolgt dann die Magnetisierung der eingesetzten Magnete mittels einer geeigneten Magnetisieranlage. Dieses Verfahren erlaubt zwar eine einfachere Bestückung. Jedoch ist eine Magnetisieranlage kostenintensiv und in Anbetracht der zu fertigenden Stückzahl betriebswirtschaftlich nicht einsetzbar, oder das entsprechend benötigte Magnetfeld ist aufgrund der Größe des Rotorsystems (z.B. im Fall von Windkraftanlagen) technisch nur mit außerordentlichem Aufwand darstellbar. Es wird zusätzliches Personal benötigt. Die zur Magnetisierung benötigten Magnetfelder sind vergleichsweise hoch und stellen ein gewisses Gefährdungspotential für die Mitarbeiter dar.

Aus diesem Grund ist es bekannt, für die Bestückung einer elektromagnetischen Maschine mit Permanentmagneten magnetische Greifer einzusetzen. Beispielsweise ist aus der DE 20 2005 017 182 U1 ein magnetischer Greifer für Permanentmagnete bekannt, der zum Greifen und Positionieren eines Permanentmagneten drehbare Greifermagnete aus Permanentmagnetmaterial umfasst. Durch Drehung der Greifermagnete kann das Magnetfeld bzgl. des zu behandelnden Permanentmagneten gleich oder entgegengesetzt ausgerichtet werden und so eine Aufnahme oder Absetzen erfolgen. Weiter ist in der EP 1 273 407 A1 ein magnetischer Greifer zur Behandlung von Permanentmagneten vorgeschlagen, wobei mittels eines Greifermagneten, der als ein Permanentmagnet oder als ein Elektromagnet ausgebildet sein kann, der zu handhabende Permanentmagnet durch Magnetkraft aufgenommen wird. Zum Absetzen des Elektromagneten sind bewegbare Stempel vorgesehen.

Der Erfindung liegt die Aufgabe zugrunde, eine Vorrichtung sowie ein Verfahren zum Greifen und Positionieren eines Permanentmagneten anzugeben, wodurch eine einfache und sichere Handhabung von Permanentmagneten möglich ist.

Diese Aufgabe wird erfindungsgemäß durch eine Vorrichtung zum Greifen und Positionieren eines Permanentmagneten gelöst, die eine mit einer Spannung beaufschlagbare Spule zur Erzeugung eines Magnetfeldes und einen sich entlang der Längsachse der Spule erstreckenden Kern aus einem ferri- oder ferromagnetischen Material umfasst, der wenigstens teilweise im Inneren der Spule aufgenommen ist. Auf einer Arbeitsseite der Vorrichtung ist an dem Kern axial endseitig außerhalb der Spule eine Haftfläche zum Greifen des Permanentmagneten angeordnet. Dabei ist an der Arbeitsseite bei spannungsbeaufschlagter Spule ein einzelner magnetischer Wirkpol ausgebildet.

Die Erfindung geht dabei in einem ersten Schritt von der Überlegung aus, dass elektromagnetische Greifer nach dem Stand der Technik zum Verstärken der Haftkraft als sogenannte Topfmagnete ausgebildet sind. Das Magnetfeld wird hierbei durch Stromfluss durch eine spannungsbeaufschlagte Spule hervorgerufen, die sich in einem offenen magnetischen Kreis aus einem magnetischen, insbesondere aus einem weichmagnetischen Material befindet. Über das magnetische Material werden die Feldlinien des Magnetfelds zur Arbeitsseite des Greifers geführt. Durch das aufgenommene Objekt wird der magnetische Kreis geschlossen.

Bei einem Topfmagneten wird sowohl der magnetische Südpol als auch der magnetische Nordpol zur Ausbildung der Greif- und/oder Haltekraft eingesetzt. Das zu greifende Objekt dient als Rückschluss der magnetischen Flussdichte und ordnet sich zwischen den magnetischen Polen an der Arbeitsseite des Greifers so an, dass sich im Greiferkern eine möglichst hohe Flussdichte ausbilden kann. Topfmagnete können daher idealerweise zum Handhaben ferromagnetischer Bauteile eingesetzt werden.

Bei der Handhabung von Permanentmagneten mit einem klassischen elektromagnetischen Greifer treten jedoch zwischen den Greiferpolen und dem Permanentmagneten sowohl anziehende als auch abstoßende Kräfte auf, was die Verwendung eines solchen mehrpoligen Magnetgreifers ausschließt. Die Permanentmagneten für eine permanenterregte elektromagnetische Maschine müssen so aufgebracht werden, dass ihre Magnetisierungsrichtung radial zur Rotorachse verläuft. Dadurch muss der Greifer den Permanentmagneten stets an einer Oberfläche mit einheitlicher Polarität greifen, infolge dessen sich sowohl zwei ungleiche wie auch zwei gleichartige Magnetpole gegenüberstehen. Die Haltekraft wird an einem magnetischen Pol des Greifers verstärkt und am anderen magnetischen Pol des Greifers verringert. Dies kann zu undefinierten und insbesondere zu unberechenbaren Greif- und Haltekräften und zu einer zufälligen Ausrichtung des Permanentmagneten am Greifer führen. Der Permanentmagnet orientiert sich stets in der Weise, dass er mit dem Greifer die energetisch günstigste Anordnung erzielt.

In einem zweiten Schritt geht die Erfindung von der Überlegung aus, dass sich die vorgenannte Problematik, die bei einem klassischen elektromagnetischen Greifer auftritt, überraschend vermeiden lässt, wenn auf der Arbeitsseite des elektromagnetischen Greifers nur ein einzelner magnetischer Wirkpol ausgebildet ist. Der Wirkpol des Greifers ist dann zu dem dem Greifer zugewandten Magnetpol eines Permanentmagneten, wie er zur Bestückung einer elektromagnetischen Maschine vorgesehen ist, entweder entgegengesetzt oder gleich gerichtet polarisiert. Die unberechenbaren Positionsänderungen des Permanentmagneten zur jeweils günstigsten energetischen Ausrichtung sind somit vermieden. Die äußeren Feldlinien zwischen den beiden Magnetpolen der Spule sind nicht materialgeführt. Vielmehr verlaufen die äußeren Feldlinien mit geringer Dichte unter Feldschwächung ungeführt, insbesondere in diamagnetischer Luft, in einem Außenbereich der Spule. Der aufzunehmende Permanentmagnet "sieht" an der Haftfläche des Kerns nur einen einzelnen magnetischen Wirkpol. Der aufgenommene Permanentmagnet schließt auch keinen materialgeführten offenen Magnetkreis, wie dies von einem Topfmagneten bekannt ist.

Hinsichtlich der zum Aufnehmen eines Permanentmagneten erforderlichen Haftkraft muss in der angegebenen Vorrichtung lediglich die Spule unter Beachtung des Wicklungsquerschnitts und der Wicklungslänge so ausgelegt sein, dass bei einer gewünschten Betriebsspannung an der Haftfläche des Kerns ein ausreichend hohes Magnetfeld auftritt. Dieses Magnetfeld muss groß genug sein, um den Permanentmagneten von der Unterlage abzulösen, an der er selbst durch Magnetkraft gehalten ist. Dies ist jedoch möglich, da in der Regel infolge von Rauigkeiten zwischen dem Permanentmagneten und der Unterlage ein Luftspalt vorliegt, durch den dort die magnetische Haftkraft verringert ist. In einer bevorzugten Ausgestaltung ist daher die Haftfläche am Kern der Vorrichtung eben ausgebildet. Unter dem Begriff "eben" wird hierbei eine geringe Abweichung einer erzeugten Fläche von der hierfür vorgegebenen Maßfläche, also eine geringe Rauheit der erzeugten Fläche verstanden. Die Haftfläche kann eine Ebene im Sinne einer geraden zweidimensionalen Fläche sein. Die Haftfläche kann aber auch eine gekrümmte Fläche sein. Die Haftfläche ist hierbei bevorzugt an die Form der aufzunehmenden Permantmagnete angepasst. Beispielsweise kann die Haftfläche als eine konkave Fläche ausgebildet sein, die an die Form von Schalenmagneten angepasst ist. Andererseits darf das Magnetfeld nicht die Koerzitivfeldstärke des Permanentmagneten übersteigen, um eine Ummagnetisierung des Permanentmagneten zu vermeiden.

Bei einem vereinzelten magnetischen Wirkpol ist es nicht möglich, die Haftkraft dadurch zu vergrößern, dass der Magnetkreis durch das aufzunehmende Objekt geschlossen wird. Bevorzugt nimmt daher die Querschnittsfläche des Kerns in Richtung zur Haftfläche monoton ab. Auf diese Weise erfolgt zur Arbeitsseite des Greifers hin eine Verdichtung der magnetischen Feldlinien und somit eine Erhöhung des Magnetfelds an der Haftfläche, über die der Permanentmagnet aufgenommen wird.

Im Falle eines Permanentmagneten muss der elektromagnetische Greifer anwendungsspezifisch ausgelegt sein, um unterschiedliche Varianten von Permanentmagneten für unterschiedliche Varianten von elektromagnetischen Maschinen gleichermaßen sicher handhaben zu können. Eine jeweils spezifische Auslegung des Greifers als solcher ist jedoch aus Kostengründen unwirtschaftlich. In einer bevorzugten Ausgestaltung ist daher die Haftfläche an einem Werkzeugeinsatz ausgebildet, der an dem Kern lösbar befestigt ist. Über den Werkzeugeinsatz kann dann in einfacher Weise beispielsweise durch eine Adaption der Haftfläche eine Anpassung des Greifers an die jeweils spezifische Bestückungsaufgabe erfolgen. Es wird jeweils lediglich der spezifische Werkzeugeinsatz eingesetzt.

Zweckmäßigerweise ist der Werkzeugeinsatz am Kern mittels eines Formund/oder Kraftschlusses befestigt. In einer besonders einfachen Ausgestaltung umfasst hierbei der Kern eine Axialbohrung, über die der Werkzeugeinsatz am Kern montiert wird. Beispielsweise ist hierzu eine Zentralschraube vorgesehen, über die der Werkzeugeinsatz durch die Axialbohrung mit dem Kern verschraubt werden kann.

Zur Erzeugung eines hohen Magnetfelds an der Haftfläche ist der Werkzeugeinsatz bevorzugt wie der Kern ebenfalls aus einem ferri- oder ferromagnetischen Material gefertigt. Die durch eine konische Ausgestaltung des Kerns bzw. durch eine monotone Abnahme seiner Querschnittsfläche in Richtung zur Haftfläche bewirkte Verdichtung der magnetischen Feldlinien wird hierbei durch den Werkzeugeinsatz bis zur Haftfläche fortgesetzt.

Zum Schutz vor äußeren Einflüssen sind in einer vorteilhaften Ausgestaltung die Spule und der Kern in ein umlaufendes Gehäuse eingesetzt, welches aus einem para- oder diamagnetischen Material gefertigt ist. Zwar wird durch ein paramagnetisches Material ebenfalls eine gewisse Feldlinienführung erzielt, so dass über das Gehäuse gegebenenfalls eine Abschwächung der Wirkung des magnetischen Einzelpols resultiert. Dies kann jedoch in Kauf genommen werden, wenn für das Gehäuse ein robustes, stabiles und relativ kostengünstiges Material eingesetzt ist. Beispielsweise hat es sich gezeigt, dass Aluminium als Gehäusematerial eingesetzt werden kann, wobei die Materialvorteile die Nachteile aufgrund seines Paramagnetismus überwiegen.

Zweckmäßigerweise ist das Gehäuse an der Arbeitsseite der Vorrichtung bis auf die Haftfläche geschlossen. Somit ist der Innenraum der Vorrichtung in hohem Maße vor äußeren Einflüssen geschützt.

In einer weiter bevorzugten Ausgestaltung sind die Spule und der Kern auf einer der Arbeitsseite abgewandten Anschlussseite in axialer Richtung elastisch an einem Flansch gelagert. Der Flansch ist hierbei insbesondere zur Kopplung an eine automatisierte Handhabungsvorrichtung, wie zum Beispiel einem Manipulatorarm oder dergleichen, ausgebildet. Über die elastische Anbindung wird es für die Aufnahme und die Ablage eines Permanentmagneten möglich, Fertigungsungenauigkeiten zu tolerieren. Auch hierdurch werden unerwünschte Bewegungen und Positionsveränderungen des Permanentmagneten infolge der gegebenen magnetischen Wechselwirkung vermieden.

Um das Magnetfeld im Inneren des Kerns möglichst ohne Abschwächung auf die Haftfläche zu übertragen, entspricht vorteilhafterweise der Flächeninhalt der Haftfläche der Endquerschnittsfläche des Kerns an der Arbeitsseite. Insbesondere ist diese Ausgestaltung auch auf den Werkzeugeinsatz übertragen.

Der vorbeschriebene elektromagnetische Greifer bzw. die Vorrichtung zum Greifen und Positionieren eines Permanentmagneten sind bevorzugt zum Betrieb mit einer Gleichspannung konzipiert. Zum Aufnehmen und Ablegen eines Permanentmagneten wird die an der Spule anliegende Gleichspannung umgepolt, wodurch sich der Stromfluss durch die Spule umkehrt. Durch Umpolen der anliegenden Gleichspannung wechselt somit die Polarität des auf der Arbeitsseite ausgebildeten magnetischen Wirkpols. Ist der Wirkpol zum der Arbeitsseite des Greifers zugewandten Magnetpol des Permanentmagneten entgegengesetzt gerichtet, so führt dies zu einer positiven Haftkraft bzw. zu einer anziehenden Kraftwirkung. Ist der Wirkpol dem der Arbeitsseite zugewandten Magnetpol des Permanentmagneten gleich gerichtet, so tritt eine negative Haltekraft bzw. eine abstoßende Kraftwirkung auf. Durch Umpolen der anliegenden Gleichspannung kann somit der Permanentmagnet aufgenommen und abgelegt werden.

Als Material für den Kern des elektromagnetischen Greifers wird vorteilhafterweise ein ferri- oder ferromagnetisches Material eingesetzt, welches eine möglichst niedrige Koerzitivfeldstärke und eine möglichst hohe Sättigungsmagnetisierung aufweist. Somit kann der Kern relativ leicht umgepolt werden. Zugleich kann ein relativ hohes Magnetfeld an der Haftfläche erzielt werden. Bevorzugt sind daher für den Kern weichmagnetische Materialien eingesetzt. Unter diesem Begriff sind ferromagnetische Materialien zusammengefasst, die eine niedrige Koerzitivfeldstärke aufweisen. Insbesondere sind bevorzugt als Materialien für den Kern eine Kobalt-Eisen-Legierung, eine Nickel-Eisen-Legierung und/oder eine Silizium-Eisen-Legierung eingesetzt. Diese Materialien zeigen insbesondere die gewünschten Eigenschaften hinsichtlich einer niedrigen Koerzitivfeldstärke bei einer gleichzeitig hohen Sättigungsmagnetisierung.

Die angegebene Vorrichtung zum Greifen und Positionieren eines Permanentmagneten kann grundsätzlich je nach Form und Dimension der handzuhabenden Permanentmagnete in beliebiger Form ausgebildet sein. Sowohl aus Fertigungsgründen als auch zur Vermeidung von Feldinhomogenitäten sind vorteilhafterweise zumindest die Spule und der Kern rotationssymmetrisch ausgestaltet.

Zur Ansteuerung der angegebenen Vorrichtung ist bevorzugt eine Steuervorrichtung und eine an die Spule angeschlossene Gleichspannungsquelle zur Erzeugung einer Speisespannung der Spule umfasst, wobei die Steuervorrichtung ausgebildet ist, die Speisespannung der Spule abhängig vom Betriebszustand umzupolen.

Die eingangs gestellte Aufgabe wird erfindungsgemäß weiter durch ein Verfahren zum Greifen und Positionieren eines Permanentmagneten gelöst, wobei der Permanentmagnet mit der vorbeschriebenen Vorrichtung ergriffen und in oder an einer vorgegebenen Position abgelegt wird. Dabei lassen sich die vorbeschriebenen für die Vorrichtung genannten Vorteile sinngemäß auf das Verfahren übertragen.

In einer bevorzugten Ausgestaltung umfasst das Verfahren zum Greifen und Positionieren eines Permanentmagneten die Schritte:
- Annähern der Arbeitsseite an den Permanentmagneten, wobei eine Gleichspannung an der Spule derart angelegt ist, dass der einzelne Wirkpol an der Arbeitsseite eine dem der Arbeitsseite zugewandten Magnetpol des Permanentmagneten entsprechende Polarität aufweist,
- Umpolen der an der Spule anliegenden Gleichspannung, so dass der einzelne Wirkpol an der Arbeitsseite eine dem der Arbeitsseite zugewandten Magnetpol des Permanentmagneten entgegengesetzte Polarität aufweist,
- Ergreifen des Permanentmagneten über die Haftfläche,
- Verbringen des ergriffenen Permanentmagneten in oder an die gewünschte Position,
- Abschalten oder Umpolen der an der Spule anliegenden Gleichspannung, so dass der einzelne Wirkpol an der Arbeitsseite eine dem der Arbeitsseite zugewandten Magnetpol des Permanentmagneten entsprechende Polarität aufweist, und
- Ablegen des Permanentmagneten in oder an der gewünschten Position und Entfernen der Arbeitsseite vom abgelegten Permanentmagneten.

Beim Annähern des Greifers an den aufzunehmenden Permanentmagneten wird die Polung der Gleichspannung so gewählt, dass zwischen der Haftfläche des Greifers und dem Permanentmagneten eine abstoßende magnetische Wechselwirkung resultiert. Hierdurch wird vermieden, dass der Permanentmagnet infolge einer attraktiven magnetischen Wechselwirkung in einer unkontrollierten Position an der Haftfläche des Greifers aufgenommen wird. Vielmehr wird beim Annähern der Arbeitsseite des Greifers der Permanentmagnet infolge der repulsiven magnetischen Wechselwirkung gegen seine Unterlage gedrückt und hierdurch in einem gewissen Umfang fixiert. Unmittelbar vor oder erst bei Kontaktaufnahme zwischen der Haftfläche und dem Permanentmagneten wird die an der Spule anliegende Gleichspannung umgepolt, so dass der Permanentmagnet infolge attraktiver Wechselwirkung nunmehr mit einer gewissen Haftkraft von der Haftfläche des Greifers ergriffen werden kann. Anschließend wird der Permanentmagnet von der Unterlage abgehoben und in oder an die gewünschte Position verbracht. Zum Ablegen wird die an der Spule anliegende Gleichspannung entweder abgeschaltet oder umgepolt, so dass der Greifer mit seiner Haftfläche vom abgelegten Permanentmagneten sicher entfernt werden kann.

In einer bevorzugten Ausgestaltung wird vor dem Abschalten oder Umpolen der an der Spule anliegenden Gleichspannung der Permanentmagnet in oder an der gewünschten Position angedrückt. Hierdurch erfolgt durch eine mechanische Kraft eine zusätzliche Fixierung des Permanentmagneten an seiner Unterlage. Auch hierdurch können unerwünschte Positionsveränderungen des Permanentmagneten infolge einer unvorhergesehenen magnetischen Wechselwirkung vermieden werden.

In einer weiter bevorzugten Variante wird die Höhe der Gleichspannung jeweils abhängig vom Betriebszustand eingestellt. Auf diese Weise kann die Magnetkraft an der Haftfläche des Greifers und damit die jeweilige Greif- oder Haltekraft, die auf den Permanentmagneten wirkt, bedarfsabhängig eingestellt werden. Beispielsweise wird die Gleichspannung beim Annähern des Greifers an einen aufzunehmenden Permanentmagneten allmählich verringert, bis sie dann nach Umpolen zur Aufnahme sprungartig erhöht wird. Nach erfolgter Aufnahme des Permanentmagneten kann die Gleichspannung verringert werden, da die benötigte Haltekraft zum Halten des Permanentmagneten geringer ist als die Greifkraft zum Abziehen des Permanentmagneten von der Unterlage.

Ausführungsbeispiele der Erfindung werden anhand einer Zeichnung näher erläutert. Dabei zeigen:
- Fig. 1:: in einer teilweise aufgeschnittenen dreidimensionalen Explosionsdarstellung vereinfacht den Aufbau einer Vorrichtung zum Greifen und Positionieren eines Permanentmagneten, wobei auf der Arbeitsseite ein einzelner magnetischer Wirkpol ausgebildet ist,
- Fig. 2:: den Verlauf der magnetischen Feldlinien an der Arbeitsseite der Vorrichtung gemäß Fig. 1,
- Fig. 3:: schematisch einen Arbeitsplatz zum Bestücken einer elektromagnetischen Maschine mit Permanentmagneten und
- Fig. 4:: schematisch den Prozessablauf zur Aufnahme und zum Positionieren eines Permanentmagneten mit einer Vorrichtung gemäß Fig. 1.

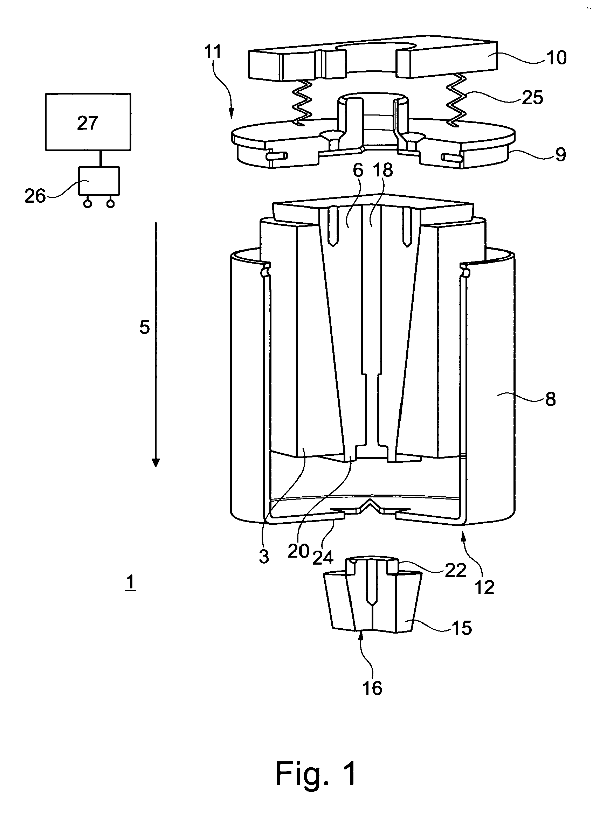

In Fig. 1 ist in einer teilweise aufgeschnittenen Explosionsdarstellung vereinfacht eine elektromagnetische Vorrichtung 1 zum Greifen und Positionieren eines Permanentmagneten gezeigt. Die Vorrichtung 1 (auch als Greifer bezeichnet) umfasst eine Spule 3, durch die eine Längsachse 5 definiert ist. Im Inneren der Spule 3 ist entlang der Längsachse 5 ein Kern 6 aus einem weichen ferromagnetischen Material eingesetzt. Sowohl die Spule 3 als auch der Kern 6 sind in ein Gehäuse 8 aus Aluminium oder idealerweise aus einem diamagnetischen Material eingesetzt. Zur Befestigung der Spule 3 und des Kerns 6 in dem Gehäuse 8 ist eine Halteplatte 9 vorgesehen. Die Halteplatte 9 ist mit einem Flansch 10 verbunden, der zur Aufnahme durch eine nicht dargestellte Handhabungsvorrichtung ausgestaltet ist. Der Flansch 10 und die Halteplatte 9 sind auf einer Anschlussseite 11 angeordnet. Auf der Anschlussseite 11 befinden sich insbesondere auch die elektrischen Anschlüsse zur Spannungsversorgung der Spule 3.

Auf der Arbeitsseite 12 der Vorrichtung 1 ist an die Spitze bzw. axialendseitig des Kerns 6 ein Werkzeugeinsatz 15 lösbar montiert. Am Ende des Werkzeugeinsatzes 15 ist eine plane und ebene Haftfläche 16 ausgebildet. Die Haftfläche 16 dient zum Ergreifen und zur Aufnahme eines Permanentmagneten. Der Werkzeugeinsatz 15 ist lösbar mittels eines Form- und Kraftschlusses an dem Kern 6 montiert. Dazu ist in dem Kern 6 eine durchgehende Bohrung 18 eingebracht. In Richtung zur Arbeitsseite 12 mündet die Bohrung 18 in einen umlaufenden Bund 20. Mit einem Axialfortsatz 22 ist der Werkzeugeinsatz 15 in den Bund 20 eingesetzt. Über eine durchgehende Zentralschraube wird der Werkzeugeinsatz 15 fest gegen den Kern 6 verschraubt. Im montierten Zustand ragt der Werkzeugeinsatz 15 mit seiner Haftfläche 16 in axialer Richtung aus dem ansonsten geschlossenen Gehäuseboden 24 heraus.

An der Vorrichtung 1 können verschiedene Werkzeugeinsätze 15 in einfacher Art und Weise montiert werden. Hierzu ist eine einfache Adaption der Vorrichtung 1 an verschiedene Varianten der aufzunehmenden Permanentmagnete ermöglicht.

Die Halteplatte 9 und damit der Kern 6, die Spule 3, das Gehäuse 8 und der Werkzeugeinsatz 15 sind mittels mindestens eines Federelements 25 elastisch gegenüber dem Flansch 10 gelagert. Hierdurch können bei der Aufnahme oder der Ablage eines Permanentmagneten Fertigungstoleranzen ausgeglichen werden oder auch gegen den Permanentmagneten dosierte Normalkräfte aufgebracht werden. Hierdurch kann der Permanentmagnet insbesondere gegenüber einer Unterlage fixiert werden, wodurch eine Verbesserung der erreichbaren Positionssicherheit gegeben ist.

Die Spule 3 ist an der Anschlussseite 11 an eine Gleichspannungsquelle 26 angeschlossen. Eine Steuervorrichtung 27 ist ausgebildet, die Gleichspannungsquelle 26 zum Betrieb der Vorrichtung 1 wenigstens umzupolen. In Richtung zur Arbeitsseite 12 verjüngt sich die Querschnittsfläche des Kerns 6. Hierdurch werden die Feldlinien des Magnetfelds im Kern 6 zur Arbeitsseite 12 und damit an der Haftfläche 16 verdichtet, so dass das Magnetfeld dort erhöht ist.

Durch das Gehäuse 8 sind die Spule 3 und der Kern 6 vor äußeren Einflüssen geschützt. Das Gehäuse 8 ist vorliegend aus Aluminium, bevorzugt jedoch aus einem diamagnetischen Material gefertigt. Insofern sind durch das Gehäuse 8 die Feldlinien des Magnetfelds der spannungsbeaufschlagten Spule 3 nicht oder nur unwesentlich materialgeführt. Vielmehr schließen sich die Feldlinien zwischen dem Magnetpol an der Arbeitsseite 12 und dem Magnetpol an der Anschlussseite 11 der Vorrichtung 1 über Luft über einen relativ großen äußeren Raumbereich. Dieser Magnetkreis der Vorrichtung 1 wird auch über einen aufgenommenen Permanentmagneten nicht geschlossen. An der Arbeitsseite 12 der Vorrichtung 1 ist ein einzelner magnetischer Wirkpol ausgebildet, dessen Polarität durch die Richtung des Stromflusses durch die Spule 6 definiert ist.

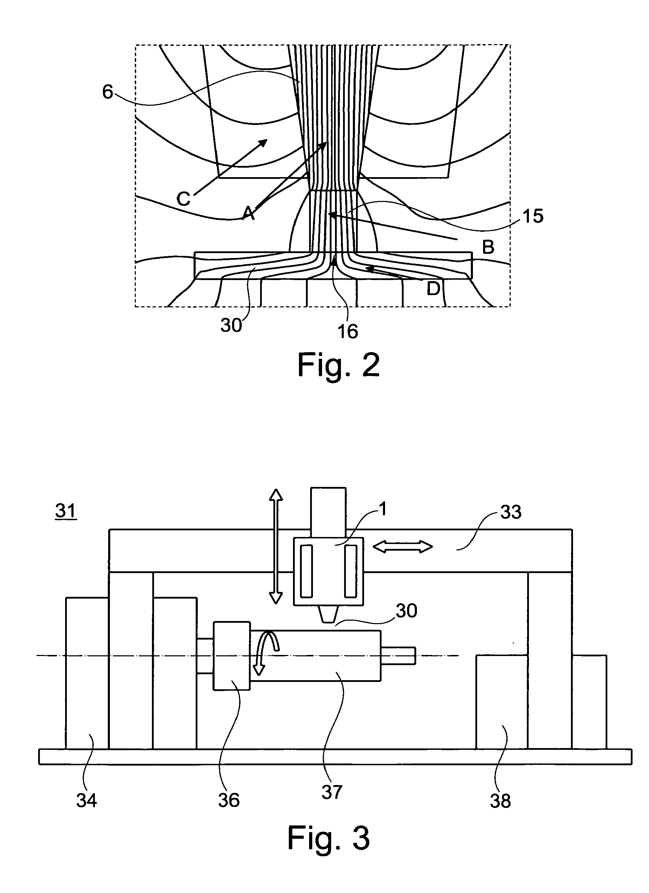

In Fig. 2 ist das resultierende Magnetfeld, welches sich bei einer spannungsbeaufschlagten Spule 3 an der Haftfläche 16 der Vorrichtung gemäß Fig. 1 ergibt, dargestellt. Man erkennt den in Richtung der Arbeitsseite 12 sich konisch verjüngenden Kern 6, den am Ende des Kerns 6 angesetzten Werkzeugeinsatz 15 und die am Ende des Werkzeugeinsatzes 15 gebildete plane Haftfläche 16. An der Haftfläche 16 ist ein Permanentmagnet 30 aufgenommen.

Die Stärke des Magnetfeldes wird aus der Dichte der dargestellten Feldlinien ersichtlich. Im Bereich A des ferri- oder ferromagnetischen Kerns 6 kommt es zu einer Verdichtung der Feldlinien und somit zur Ausbildung eines starken Magnetfeldes. Die Verdichtung der Feldlinien setzt sich in einem Bereich B in den aufmontierten Werkzeugeinsatz 15 fort. Der aufgenommene Permanentmagnet 30 weist an seiner der Haftfläche 16 zugewandten Seite einen Magnetpol auf, der eine zum Magnetpol an der Haftfläche 16 des Werkzeugeinsatzes 15 entgegengesetzte Polarität besitzt. Insofern schließen sich die vom Werkzeugeinsatz 15 und vom Permanentmagneten 30 ausgehenden Feldlinien im Bereich der Haftfläche 16. Der Feldlinienschluss des Magnetpols am dargestellten Ende des Kerns 6 zum Magnetpol an seinem anderen Ende erfolgt über Luft (Bereich C). Der Permanentmagnet 30 sieht am dargestellten Ende des Kerns 6 bzw. am Ende des Werkzeugeinsatzes 15 einen vereinzelten magnetischen Wirkpol. Im Inneren des Permanentmagneten 30 setzen sich die Feldlinien des Werkzeugeinsatzes 15 fort (Bereich D).

Es wird ersichtlich, dass unkontrollierte Bewegungen des Permanentmagneten 30, wie sie bei Annäherung eines herkömmlichen magnetischen Greifers mit zwei Wirkpolen auftreten würden, durch den dargestellten Greifer verhindert sind. Je nach Polung der an der Spule 3 anliegenden Gleichspannung erfährt der Permanentmagnet 30 bei Annäherung des Kerns 6 entweder ausschließlich eine attraktive oder ausschließlich eine repulsive Wechselwirkung. Die Richtung dieser Wechselwirkung ist durch die Formgebung des Werkzeugeinsatzes 15, insbesondere durch die Ausbildung der planen Haftfläche 16 bestimmt.

In Fig. 3 ist schematisch ein Arbeitsplatz 31 zum Bestücken einer elektromagnetischen Maschine mit Permanentmagneten 30 dargestellt. Der Arbeitsplatz 31 umfasst ein die Arbeitsfläche überspannendes Portal 33. Eine Vorrichtung 1 entsprechend Fig. 1 ist in verschiedene Raumrichtungen entlang des Portals bewegbar geführt. In einer Drehaufnahme 34 ist mittels eines Spannfutters 36 beispielhaft der Läufer 37 einer elektromagnetischen Maschine aufgenommen. Der Läufer 37 ist mit einzelnen Permanentmagneten 30 in jeweils spezifischer Position und ohne Luftspalt aneinander gereiht zu bestücken.

Zur Aufnahme eines Permanentmagneten 30 fährt die Vorrichtung 1 entlang des Portals 33 zu einer Magnetvereinzelung 38, wird dort abgesenkt und nimmt durch eine entsprechende Polung der an der Spule anliegenden Gleichspannung durch attraktive Wechselwirkung einen einzelnen Permanentmagneten 30 in definierter Position auf. Nach Anhebung der Vorrichtung 1 verfährt diese entlang des Portals 33 bis über den Läufer 37. Anschließend wird die Vorrichtung 1 mit dem aufgenommenen Permanentmagneten 30 auf den Läufer 37 abgesenkt. Durch Trennung der Spule 3 von der Gleichspannung oder durch Umpolen wird der Permanentmagnet 30 an der gewünschten Position am Läufer 37 abgelegt. Anschließend kann die Vorrichtung 1 einen weiteren Permanentmagneten 30 in der Magnetvereinzelung 38 aufnehmen. Zur Positionierung der Permanentmagneten 30 in Umfangsrichtung wird der Läufer 37 über die Drehaufnahme 34 entsprechend gedreht.

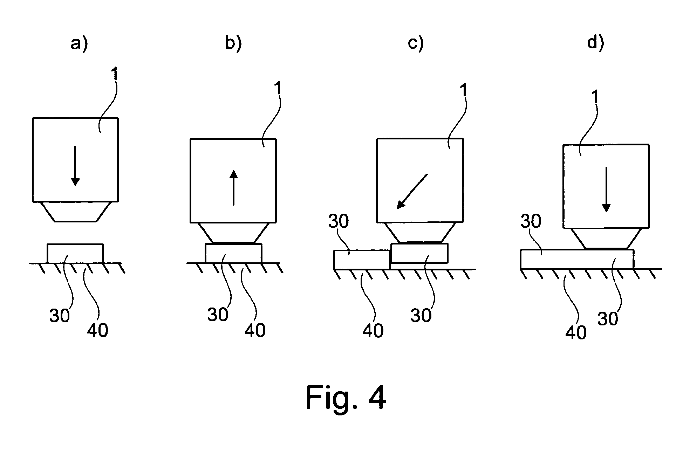

In Fig. 4 ist schematisch der Prozessablauf zur Aufnahme und zum Positionieren eines Permanentmagneten mit einer Vorrichtung 1 gemäß Fig. 1 in Einzelschritten dargestellt. In Schritt a) nähert sich die Vorrichtung 1 einem aufzunehmenden Permanentmagneten 30 an. Dabei wird die Spule der Vorrichtung 1 mit einer Gleichspannung derart beaufschlagt, dass die Magnetpole an der Haftfläche der Vorrichtung 1 und an der der Haftfläche zugewandten Seite des Permanentmagneten 30 dieselbe Polarität aufweisen. Beim Annähern der Vorrichtung 1 an den Permanentmagneten 30 wird dieser durch die resultierende repulsive Wechselwirkung gegen seine Unterlage 40 gedrückt und entsprechend fixiert. Somit sind unkontrollierte Bewegungen des Permanentmagneten 30, z.B. durch Springen gegen die Haftfläche, unterdrückt.

Bei Kontaktaufnahme gemäß Schritt b) erfolgt eine Umpolung der an der Spule anliegenden Gleichspannung. Infolge der dann herrschenden attraktiven Wechselwirkung koppelt der Permanentmagnet 30 über die Haftfläche der Vorrichtung 1 an. Der Permanentmagnet 30 wird von der Vorrichtung 1 ergriffen. Das Magnetfeld, welches den Permanentmagneten 30 an der Vorrichtung 1 hält, ist größer als das Magnetfeld, welches zwischen dem Permanentmagneten 30 und seiner Unterlage 40 ausgebildet ist.

Anschließend kann die Vorrichtung 1 mit dem aufgenommenen Permanentmagneten 30 in oder an eine andere Position verbracht werden. In Schritt c) wird die Vorrichtung 1 mit einem aufgenommenen Permanentmagneten 30 gegen die Unterlage 40 abgesenkt und zugleich ansatzlos seitlich gegen einen bereits abgelegten Permanentmagneten 30 verfahren. In Schritt d) wird die Vorrichtung 1 mit einer vorgegebenen Kontaktkraft nach unten gedrückt. Der abzulegende Permanentmagnet 30 wird hierbei gegen die Unterlage 40 gepresst. In dieser Position verharrt die Vorrichtung 1 insbesondere bis ein Kleber zwischen dem Permanentmagneten 30 und der Unterlage 40 ausgehärtet ist. Anschließend wird die Gleichspannung an der Spule zur Ausbildung einer repulsiven Wechselwirkung erneut umgepolt oder aber es wird die Spule von der Gleichspannung entkoppelt. Die Vorrichtung 1 wird ohne Permanentmagnet 30 von der Unterlage 40 abgehoben.

### Bezugszeichenliste

- 1: Vorrichtung
- 3: Spule
- 5: Längsachse
- 6: Kern
- 8: Gehäuse
- 9: Halteplatte
- 10: Flansch
- 11: Anschlussseite
- 12: Arbeitsseite
- 15: Werkzeugeinsatz
- 16: Haftfläche
- 18: Bohrung
- 20: Bund
- 22: Axialfortsatz
- 24: Gehäuseboden
- 25: Federelement
- 26: Gleichspannungsquelle
- 27: Steuereinheit
- 30: Permanentmagnet
- 31: Arbeitsplatz
- 33: Portal
- 34: Drehaufnahme
- 36: Spannfutter
- 37: Läufer
- 38: Magnetvereinzelung
- 40: Unterlage

- A,B,C,D: Feldbereiche

## Patentansprüche

1. Vorrichtung (1) zum Greifen und Positionieren eines Permanentmagneten (30), umfassend eine mit einer Spannung beaufschlagbare Spule (3) zur Erzeugung eines Magnetfeldes und einen sich entlang der Längsachse (5) der Spule (3) erstreckenden Kern (6) aus einem ferri- oder ferromagnetischen Material, der wenigstens teilweise im Inneren der Spule (3) aufgenommen ist, und an dem auf einer Arbeitsseite (12) axialendseitig außerhalb der Spule (3) eine Haftfläche (16) zum Greifen des Permanentmagneten (30) angeordnet ist, wobei an der Arbeitsseite (12) bei spannungsbeaufschlagter Spule (3) ein einzelner magnetischer Wirkpol ausgebildet ist.

2. Vorrichtung (1) nach Anspruch 1,
wobei die Querschnittsfläche des Kerns (6) in Richtung zur Haftfläche (16) monoton abnimmt.

3. Vorrichtung (1) nach Anspruch 1 oder 2,
wobei die Haftfläche (16) an einem insbesondere aus einem ferri- oder ferromagnetischen Material gefertigten Werkzeugeinsatz (15) ausgebildet ist, der an dem Kern (6) lösbar befestigt ist.

4. Vorrichtung (1) nach Anspruch 3,
wobei der Kern (6) eine Axialbohrung umfasst, über die der Werkzeugeinsatz (15) am Kern (6) befestigt ist.

5. Vorrichtung (1) nach einem der vorhergehenden Ansprüche,
wobei die Spule (3) und der Kern (6) in ein umlaufendes Gehäuse (8) eingesetzt sind, welches aus einem para- oder diamagnetischen Material gefertigt ist.

6. Vorrichtung (1) nach Anspruch 5,
wobei das Gehäuse (8) an der Arbeitsseite (12) bis auf die Haftfläche (16) geschlossen ist.

7. Vorrichtung (1) nach einem der vorhergehenden Ansprüche,
wobei die Spule (3) und der Kern (6) auf einer der Arbeitsseite (12) abgewandten Anschlussseite (11) in axialer Richtung elastisch an einem Flansch (10) gelagert sind.

8. Vorrichtung (1) nach einem der vorhergehenden Ansprüche,
wobei die Haftfläche (16) eben ausgebildet ist.

9. Vorrichtung (1) nach einem der vorhergehenden Ansprüche,
wobei der Flächeninhalt der Haftfläche (16) der Endquerschnittsfläche des Kerns (6) an der Arbeitsseite (12) entspricht.

10. Vorrichtung (1) nach einem der vorhergehenden Ansprüche,
wobei für den Kern (6) ein weichmagnetisches Material, insbesondere eine Kobalt-Eisen-Legierung, eine Nickel-Eisen-Legierung oder eine Silizium-Eisen-Legierung, eingesetzt ist.

11. Vorrichtung (1) nach einem der vorhergehenden Ansprüche,
wobei eine Steuervorrichtung (27) und eine an die Spule (3) angeschlossene Gleichspannungsquelle (26) zur Erzeugung einer Speisespannung der Spule (3) umfasst sind, und wobei die Steuervorrichtung (27) ausgebildet ist, die Speisespannung der Spule (3) abhängig vom Betriebszustand umzupolen.

12. Verfahren zum Greifen und Positionieren eines Permanentmagneten (30),
wobei der Permanentmagnet (30) mit einer Vorrichtung (1) nach einem der vorhergehenden Ansprüche ergriffen und an einer vorgegebenen Position abgelegt wird.

13. Verfahren nach Anspruch 12 mit den folgenden Schritten:
- Annähern der Arbeitsseite (12) an den Permanentmagneten (30), wobei eine Gleichspannung an der Spule (3) derart angelegt ist, dass der einzelne Wirkpol an der Arbeitsseite (12) eine dem der Arbeitsseite (12) zugewandten Magnetpol des Permanentmagneten (30) entsprechende Polarität aufweist,
- Umpolen der an der Spule (3) anliegenden Gleichspannung, so dass der einzelne Wirkpol an der Arbeitsseite (12) eine dem der Arbeitsseite (12) zugewandten Magnetpol des Permanentmagneten (30) entgegengesetzte Polarität aufweist,
- Ergreifen des Permanentmagneten (30) über die Haftfläche (16),
- Verbringen des ergriffenen Permanentmagneten (30) in oder an die gewünschte Position,
- Abschalten oder Umpolen der an der Spule (3) anliegenden Gleichspannung, so dass der einzelne Wirkpol an der Arbeitsseite (12) eine dem der Arbeitsseite (12) zugewandten Magnetpol des Permanentmagneten (30) entsprechende Polarität aufweist, und
- Ablegen des Permanentmagneten in oder an der gewünschten Position und Entfernen der Arbeitsseite vom abgelegten Permanentmagneten.

14. Verfahren nach Anspruch 13,
wobei vor dem Abschalten oder Umpolen der an der Spule (3) anliegenden Gleichspannung zum Zwecke des Ablegens der Permanentmagnet (30) in oder an der gewünschten Position angedrückt wird.

15. Verfahren nach Anspruch 13 oder 14,
wobei die Höhe der Gleichspannung jeweils abhängig vom Betriebszustand eingestellt wird.
